# EUROPEAN PATENT APPLICATION

(11) **EP 0 869 566 A2**
(43) Date of publication of application: **07.10.1998**
(21) Application number: 98104025.6
(22) Date of filing: 06.03.1998
(51) Int. Cl.: H01M 4/58, C01B 31/00

(54) **Graphite material for use in negative electrode of lithium-ion secondary battery and process for producing the same**

(30) Priority: 07.03.1997 JP 68985/97; 11.03.1997 JP 72824/97
(71) Applicant: PETOCA, Ltd, Tokyo 102-8542 (JP)
(72) Inventor: Tamaki, Toshio, Kashima-gun, Ibaraki 314-0198 (JP); Nishimura, Yoshiyuki, Kashima-gun, Ibaraki 314-0198 (JP); Nakajima, Hideyuki, Kashima-gun, Ibaraki 314-0198 (JP)
(74) Representative: VOSSIUS & PARTNER

(57) **Abstract**

A graphite material for use in a negative electrode of a lithium-ion secondary battery, comprising a graphite material obtainable by solidifying a homogeneous molten mixture composed of a molten pitch and a boric compound to thereby obtain a solid material, carbonizing the solid material, pulverizing the carbonized material and graphitizing the pulverized material, this graphite material having a specified magnetic susceptibility. This graphite material can be produced at lowered cost and can provide a negative electrode which enables producing a lithium-ion secondary battery being excellent in charge and discharge characteristics such as discharge capacity, initial charge and discharge efficiency and repeated charge and discharge performance. Moreover, when this graphite material is milled graphite fibers produced from a fibrous material (pitch fiber) obtained by spinning the above homogeneous molten mixture, a negative electrode material having an internal texture especially suitable for occlusion of lithium ions, such that graphite layer plane are exposed on the particle surface and graphite layers are oriented in a circumferential direction, can be provided.

## Description

The present invention relates to a graphite material which can suitably be used in a negative electrode of a lithium-ion secondary battery and to a process for producing the same.

More particularly, the present invention is concerned with a graphite material for negative electrodes which can suitably be used in a negative electrode for providing a lithium-ion secondary battery having large charge and discharge capacities and a high energy density and exhibiting excellent charge and discharge cycle characteristics and is concerned with a process for producing the graphite material.

The battery in which an alkali metal is used as an active material of a negative electrode has generally various advantages. For example, the battery exhibits high energy density and high electromotive force and is lightweight and miniaturized. Further, when a nonagueous electrolyte is employed, the battery exhibits a wide operating temperature range and is excellent in shelf life. Therefore, a number of attempts have been made to practically use the above secondary battery, in which alkali metal ions, especially, lithium ions are incorporated as an active material of a negative electrode, as a power source for use in a portable electronic appliance and also as a high-performance battery for use in an electric vehicle and electricity storage. Especially, the recent demand for further miniaturization, enhancement of performance and prolongation of life of a portable appliance is intense, so that it is strongly demanded that the secondary battery as an appliance driving source have further increased energy density.

However, all the hitherto developed prototype batteries have not fully realized the capabilities to be naturally exhibited by the lithium-ion secondary battery, and thus have been incomplete from the viewpoint of charge and discharge cycle performance, charge and discharge capacities and energy density.

In the lithium-ion secondary battery, an indispensable condition for meeting the above demand resides in improvement of both electrodes thereof. With respect to the positive electrode, extensive studies are being conducted on nickel oxide enabling a capacity increase.

With respect to the negative electrode, when, for example, metallic lithium is used as a negative electrode, lithium precipitated during charging forms acicular dendrites, so that a short circuit is likely to occur between the negative and positive electrodes to thereby shorten the cycle life of the secondary battery. Further, another problem is encountered such that lithium has extremely high reactivity with the result that the surface of the negative electrode is modified by the decomposition reaction of the electrolyte to thereby cause repeated uses of the secondary battery to lower the cell capacity.

Various studies have been made on the material of the negative electrode with a view toward solving the above problems of the lithium-ion secondary battery.

For example, the use of alloys containing lithium, such as lithium/aluminum alloy and Wood's alloy, in the negative electrode of the lithium-ion secondary battery has been studied. However, when these alloys are used in the negative electrode of the lithium-ion secondary battery, a problem is encountered such that crystal structure changes due to differences in operating temperature and charge and discharge conditions.

In recent years, it has become apparent that the occurrence of dendrite can be prevented by the use, in the negative electrode, of a carbonaceous material (carbon material or graphite material) in which lithium ions are occluded. Thus,a carbonaceous material is intensively being studied as the most promising material of the negative electrode of the secondary battery.

Generally, the carbonaceous material is divided into carbon material and graphite material, depending on the level of growth of graphite structure thereof.

Examples of carbon materials commonly employed in the negative electrode of the lithium-ion secondary battery include natural materials such as coal, coal based carbon materials such as coke, polymeric compound based carbon fibers such as PAN based carbon fibers, non-graphitic pitch based carbon fibers and pitch based spherical carbon materials.

However, these carbon materials have several drawbacks, for example, in that they are mainly composed of amorphous carbon and have small graphite crystallites with their crystal arrangement disorderly, so that the charge and discharge capacities thereof are unsatisfactory, and in that, when the current density is set high at the time of charging or discharging, decomposition of the electrolyte occurs to thereby lower the cycle life.

On the other hand, graphite materials, such as natural graphite and artificial graphites including graphite fibers, can provide a negative electrode capable of prolonging the cycle life and are now attracting most intensive attention and being extensively studied as a carbonaceous material for forming the negative electrode of the lithium-ion secondary battery.

Although the chargeable or dischargeable capacity per weight of the natural graphite is pretty large if the graphitization degree thereof is high, the natural graphite has drawbacks in that the current density ensuring ready discharge is low and in that the charging and discharging at a high current density would inevitably lower the charge and discharge efficiency.

The artificial graphites such as graphite fibers are obtained by performing a heat treatment of a carbon material (carbon fibers) at relatively high temperatures (generally, 2000°C or higher).

It is indicated in, for example, JP-A-6(1994)-168725 that the negative electrode made from the graphite fibers obtained by graphitization of carbon fibers derived from mesophase pitch as a starting material can provide a battery which is superior in various battery properties.

However, the above graphite fibers are various in the size and configuration of crystallites, the content of impurities, etc., depending on, for example, the type of the starting material and the manufacturing conditions. Thus, the problem is encountered that it can hardly be stated that the internal texture structure of the graphite fibers is controlled so as to take a form optimum as the carbon material for use in the negative electrode of the lithium-ion secondary battery. Consequently, the current situation is that any graphite material which is satisfactory in all respects including cycle life and charge and discharge capacities has not yet been developed.

There is a close relationship between the charge and discharge capacities and the degree of graphitization in the graphite material for use in the lithium-ion secondary battery. Therefore, how to enhance the degree of graphitization is an important issue for improvement.

For example, boron is known as being an element capable of advancing the graphitization, and various reports have been presented on the relationship between the amount of added boron or treating temperature and the X-ray parameter. Further, it has been reported that the proportion of graphite skeleton replaced by boron, known as the solid-soluble proportion is up to 2-3 atm% (see Kazuo Kobayashi, Tanso (Carbon), 1987, No. 128, 2 and C. E. Lowell, J. Am. Ceram. Soc. 50, 142 (1967)).

Furthermore, boron not only advances the graphitization but also is itself an electron attractive element to thereby act to stabilize lithium, so that it is presumed that the graphite material having its graphite skeleton partly replaced by boron provides a material suitable for use in the negative electrode of a nonagueous lithium-ion secondary battery.

In this respect, JP-A-(1994)-333601 and 7(1995)-73898 disclose a process for producing a carbon material containing boron in the state of the solid solution through replacing part of carbon atoms forming graphite layer by boron atoms. It is also described therein that the lithium-ion secondary battery using this carbon material in the negative electrode thereof exhibits improved lithium-associated charge and discharge capacities.

However, the above carbon material without exception is synthesized by the CVD process in which use is made of boron chloride (BCl₃) and benzene (C₆H₆) and has had a drawback in that the charge and discharge efficiency (discharge capacity/charge capacity) cannot satisfactorily be enhanced. Further, the problem has been encountered that, in replacing graphite-crystal lattice forming carbon atoms per se by other atoms according to the CVD process, not only is a special complicated device needed but also a considerably high technique is necessary for controlling the degree of the replacement.

Further, JP-A-3(1991)-245458 proposed the use, in a negative electrode of lithium-ion secondary battery, of the carbon material or carbon fiber which is obtained by sintering various organic materials such as carbon fibers based on a furfuryl alcohol/maleic anhydride copolymer or a polyamide in the presence of a boric compound at a temperature as low as about 1200°C and which has a boron content of 0.1 to 2.0% by weight. However, the carbon material obtained by the proposed sintering method is not satisfactory in respect of the increase of charge and discharge capacities of the secondary battery including a negative electrode composed of the above carbon material, even if the residual boron content thereof is increased. Especially, the use of this carbon material has not attained any improvement in cell voltage.

Still further, JP-A-5(1993)-251080 proposed the carbon material obtained by adding, for example, H₃BO₃ to natural graphite and sintering the resultant natural graphite at 1000°C. The disclosure of this literature includes the suggestion of adding boron in an amount of up to 10% by weight at the sintering of natural graphite so that the incorporation of lithium ions in the carbon material is facilitated to thereby improve the battery performance exhibited when the carbon material is used in the negative electrode of the battery. However, when used as a negative electrode, the thus obtained carbon material suffered from a serious cycle deterioration of charge and discharge capacities and was unable to realize a high charge and discharge efficiency (discharge capacity/charge capacity).

Moreover, JP-A-8(1996)-31422 and 8(1996)-306359 disclose a method comprising adding boron or a boric compound to carbon powder or pitch based milled carbon fibers and graphitizing the mixture at 2500°C or higher in an inert gas to thereby increase the degree of graphitization, so that the charge and discharge capacities are enhanced.

However, as a result of detailed studies of the above method conducted by the inventors, it has been found that the boric compound must be added in excess of an essentially required amount for graphitization in order to realize the enhancement of the degree of graphitization by the addition of the boric compound.

The reason would be that boron is supplied only from the surface of the carbon material because the graphitization is conducted after the mixing of carbon fibers and boric compound, so that the rate of supply of boron into the fiber interior is suppressed. Therefore, a large amount of boron source is required for not only homogeneously promoting the graphitization of the raw carbon material to the interior thereof but also attaining a solid dissolution of boron into the graphite skeleton to the limit quantity.

The use of the excess boric compound not only increases the cost of production of the graphite material but also invites the formation of boron carbide at the surface of carbon material during the graphitization thereof. Further, when nitrogen gas is used as an inert gas during the graphitization, boron nitride is formed on the surface of obtained graphite fibers by the boric compound used in excess. Thus, the problem is encountered that this nitrogen compound inhibits an occlusion (intercalation) of lithium ions and also causes an electrical conductivity lowering to thereby increase the impedance of negative electrode with the result that the anticipated enhancement of charge and discharge characteristics cannot be achieved.

The formation of boron nitride can be prevented by a method using a rare gas such as argon gas as an inert gas during the graphitization. However, the use of a rare gas invites an extreme increase of the production cost. Further, the formation of boron carbide by the use of the excess boric compound cannot be prevented even if the graphitization is conducted in a rare gas such as argon gas. Still further, a complete replacement of the air in a heating device by a rare gas is practically infeasible, so that the mixing of nitrogen into graphitization atmosphere cannot be avoided to thereby disenable completely preventing the formation of boron nitride.

As apparent from the above, the prior art has failed to produce a graphite material in which a satisfactory amount of boron is solid-dissolved with the content of boron carbide and boron nitride desirably reduced. The inventors have conducted extensive and intensive studies with a view toward overcoming the above drawbacks of the prior art. As a result, it has been found that the use of a graphite material obtained by solidifying a molten mixture composed of a molten pitch and a boric compound to thereby obtain a solid raw material, pulverizing the solid raw material and graphitizing the pulverized material, which graphite material has a specified range of magnetic susceptibility, enables producing a negative electrode capable of providing a lithium-ion secondary battery exhibiting excellent battery performance, especially, excellent charge and discharge characteristics. The present invention has been completed on the basis of the above finding.

The object of the present invention is to provide a graphite material for negative electrodes which enables producing a negative electrode capable of providing a lithium-ion secondary battery exhibiting excellent charge and discharge characteristics, especially, excellent initial charge and discharge efficiency and charge and discharge cycle characteristics and to provide a process for producing the graphite material.

The graphite material for use in a negative electrode of a lithium-ion secondary battery according to the present invention comprises a graphite material which is obtainable by solidifying a homogeneous molten mixture composed of a molten pitch and a boric compound to thereby obtain a solid material, carbonizing the solid material, pulverizing the carbonized material and graphitizing the pulverized material, the above graphite material having a magnetic susceptibility of at least -5 x 10⁻⁶ emu/g.

In the graphite material for negative electrodes according to the present invention, it is preferred from the viewpoint of rapid graphitization that the pitch be selected from easily graphitizable petroleum and coal pitches having softening points ranging from 70°C to 230°C.

The graphite material for negative electrodes according to the present invention may be milled graphite fibers which are obtainable by spinning the above homogeneous molten mixture to thereby obtain a fibrous material, infusibilizing the fibrous material, carbonizing the infusibilized material, milling the carbonized material and graphitizing the milled material.

When the graphite material for negative electrodes according to the present invention is milled graphite fibers, it is preferred that the molten pitch be an easily graphitizable pitch whose mesophase content is substantially 100%, from the viewpoint that a desired texture structure can be realized.

The process for producing a graphite material for use in a negative electrode of a lithium-ion secondary battery according to the present invention comprises the steps of:
solidifying a molten mixture obtained by homogeneously mixing a molten pitch and a boric compound to thereby obtain a solid material,
carbonizing the solid material at 500°C to 1200°C in an inert gas to thereby obtain a carbon material,
pulverizing the carbon material into a particulate carbon material having an average particle size of 10 to 50 µm, and
graphitizing the particulate carbon material at 2300°C or higher in an inert gas.

Also, the process for producing a graphite material for negative electrodes according to the present invention may comprise the steps of:
spinning the above homogeneous molten mixture to thereby obtain a fibrous material,
infusibilizing the fibrous material in an oxidative gas to thereby obtain an infusibilized fiber,
carbonizing the infusibilized fiber at 500°C to 1200°C in an inert gas to thereby obtain a carbonized fiber,
milling the carbonized fiber into milled carbon fibers having an average particle size of 10 to 50 µm, and
graphitizing the milled carbon fibers at 2300°C or higher in an inert gas.

In the process for producing a graphite material for negative electrodes according to the present invention, in the graphitization step, the obtained graphite material or milled graphite fibers would have a surface boron nitride content of 0 to 10% by weight as measured by electron spectroscopy for chemical analysis (ESCA), even if nitrogen gas is contained in as the inert gas.
Fig. 1 is a graph showing the results of measurement of the magnetic susceptibility of each of the graphite materials of Example 1 and Comparative Example 1; and
Fig. 2 is a graph showing the results of measurement of the magnetic susceptibility of each of the milled graphite fibers of Example 8 and Comparative Example 4.

The present invention will be described in greater detail below.

The graphite material for use in a negative electrode of a lithium-ion secondary battery according to the present invention comprises a graphite material obtained by solidifying a homogeneous molten mixture composed of a molten pitch and a boric compound to thereby obtain a solid material, carbonizing the solid material, pulverizing the carbonized material and graphitizing the pulverized material, this graphite material having a specified magnetic susceptibility.

In the graphite material for negative electrodes according to the present invention, the raw material pitch for use in the production of the solid material is appropriately selected depending on the properties and configuration to be possessed by the produced graphite material and is not particularly limited. The raw material pitch may be any of petroleum and coal pitches.

Although the softening point of pitch useful as the raw material generally ranges from 70° to 400°C, it is preferred to use an easily graphitizable pitch which does not contain any three-dimensional crosslink and has a softening point of not greater than 230°C.

Pitches having three-dimensional crosslinks have softening points higher than 230°C, and graphitization thereof is difficult. Therefore, such pitches are not preferable from the viewpoint of effectively carrying out the graphitization.

The use of an optically anisotropic pitch, namely, mesophase pitch as the raw material pitch is advantageous in that the carbonization yield is enhanced although cost is incurred by the conversion to mesophase.

In the production of milled graphite fibers as the graphite material, mesophase pitch, especially, pitch of 100% mesophase is preferred from the viewpoint that pitch molecules are oriented at the time of spinning of the molten mixture to thereby enable obtaining graphite fibers having a desired texture structure.

Although the mesophase pitch has a softening point generally ranging from 250°C to 400°C, it is preferred that the softening point thereof be up to 350°C, especially, range from 250°C to 330°C, from the viewpoint that the below described agitation of a molten pitch with a boric compound and spinning of the molten mixture can be smoothly performed.

When the softening point of the mesophase pitch as the raw material exceeds 350°C, not only is the temperature for agitation of a molten mixture of a molten pitch and boron increased so that coking is likely to occur during the agitation but also the temperature for spinning of the molten mixture is increased to thereby invite the danger that the properties of the pitch is changed during the spinning. On the other hand, when the softening point of the mesophase pitch is too low, for example, below 250°C, there is the danger that the spun material fuses and suffers from fiber-to-fiber bonding at the below described infusibilization step.

Examples of boric compounds to be mixed with the above raw material pitch in the preparation of the molten mixture as the raw material include boron per se, inorganic boric compounds such as boron carbide (B₄C), boron chloride, boric acid, boron oxide, sodium borate, potassium borate, copper borate and nickel borate, and organic boric compounds such as boron trifluoride/methanol complex (BF₃-CH₃OH) and borane/dimethylamine complex [BH₃-HN(CH₃)₂]. These compounds may be used either individually or in combination.

The above boric compound is preferably finely pulverized so that it is homogeneously dispersed in and mixed with the molten pitch. For example, the boric compound is used in the form of particles having an average size of up to 100 µm, preferably, from 1.7 to 70 µm.

In the production of the graphite material for negative electrodes according to the present invention, use is made of the solid material obtained by solidifying the molten mixture of the above molten pitch and boric compound which are homogeneously mixed together.

In the melt mixing of the raw material pitch and boric compound, it is preferred that the boric compound be used in an amount of 0.5 to 5 parts by weight, especially, from 1 to 4 parts by weight in terms of boron atoms per 100 parts by weight of the raw material pitch.

When the amount of added boric compound is less than 0.5 part by weight, the effect thereof on the advancing of the graphitization of the carbon material may be lowered. On the other hand, when the amount exceeds 5% by weight, it may occur that boric compounds are formed on the surface of the carbon material by the excess boron to thereby invite a drop of the battery capacity.

The melt mixing of the boric compound and molten pitch as the raw material is generally conducted in an atmosphere not containing oxygen gas, for example, an inert atmosphere such as nitrogen or argon in order to avoid the denaturation of the molten pitch. Conducting the melt mixing in a nitrogen atmosphere is especially preferred from the viewpoint of processing cost. For obtaining the graphite material of high quality, it is preferred to increase the homogeneity of the molten mixture, namely, homogeneously disperse boric compound particles by agitation or other appropriate means.

The melt mixing is conducted at temperatures higher than the softening point of the raw material pitch. The melt mixing temperature is preferably at least 30°C higher than, still preferably, 40°C to 100°C higher than the softening point of the raw material pitch so that the molten pitch has a viscosity suitable for realizing a homogeneous mixing with the boric compound.

Extremely increasing the mixing temperature is useless because not only is there no longer any difference in molten mixture homogeneity but also heating cost is increased. When the mixing temperature is 450°C or higher, the pitch is likely to suffer from coking with the result that the promotion of the graphitization after the carbonization may be difficult.

In the present invention, the thus obtained molten mixture is solidified to thereby obtain the solid material, which is carbonized and graphitized. Pulverization is performed between the solidification and the graphitization.

The graphite material for negative electrodes can be obtained by pulverizing the produced graphite material after the graphitization step and regulating the pulverized material to a specified particle size. However, in this process, a product loss occurring at the pulverization is loss of a graphitized one and unfavorably causes a cost increase. Moreover, exposure of internal chemically active graphite planes of graphite particles occurs by the pulverization of the graphite material, so that the pulverization after the graphitization is not favorable from the viewpoint of performance as well.

Therefore, in the present invention, the molten mixture is solidified to thereby obtain a solid material of desired configuration, the solid material is carbonized to give it a hardness suitable for pulverization, and then the carbonized material is pulverized and graphitized. That is, graphitizing subsequent to regulation (classification) of the pulverized carbon material to a specified particle size avoids the graphitization of excess carbon material having been excessively pulverized to thereby attain an energy saving. Moreover, the obtained graphite particles have their surface heated at high temperature to thereby become chemically inert, so that they can be used as a suitable negative electrode material.

The configuration of the solid material to be carbonized and the process for producing the solid material are not particularly limited. For example, the solid material can be obtained simply by placing a molten mixture in a container of desired configuration and allowing it to stand still and cool so that a solidification is achieved. However, it is especially desirable to employ a solid material (pitch fiber) rendered fibrous by spinning the molten mixture from the viewpoint that a high productivity is realized and the subsequent pulverization is facilitated and that the graphite layers constituting the internal texture of the graphite material can be oriented in the desired direction.

The method of spinning the molten mixture is not particularly limited, and the spinning can be accomplished by the use of various techniques, such as melt spinning, melt blow, centrifugal spinning and vortex spinning techniques. Especially, the melt blow technique is preferred from the viewpoint of the spinning productivity and the orientation of pitch molecules in obtained fiber. The melt blow technique is advantageous in that a graphite fiber of such a texture structure that the graphite layers are oriented so as to be suitable for the occlusion of lithium ions can be obtained by spinning the molten mixture at a viscosity as low as not greater than tens of poises followed by high-speed quenching so that the pitch molecules are oriented.

In the use of the melt blow technique, each spinning orifice generally has a diameter ranging from 0.1 to 0.5 mm, preferably, from 0.15 to 0.3 mm.

When the spinning orifice has a diameter of less than 0.1 mm, the disadvantage is encountered that not only is the spinning orifice likely to suffer from clogging during the spinning but also the manufacture of a spinning nozzle with the orifice is difficult.

On the other hand, the use of a spinning orifice having a diameter of more than 0.5 mm is unfavorable from the viewpoint of product quality control because the fiber diameter is likely to become as large as 25 µm or greater and is further likely to vary.

Further, the spinning speed is at least 500 m/min, preferably, at least 1500 m/min and, still preferably, at least 2000 m/min so as to attain a desirable productivity.

The spinning temperature depends to some extent on the type of pitch as the starting material. Generally, however, the spinning temperature is not limited as long as it is not lower than the softening point of the pitch and is not higher than the temperature at which the pitch is no longer decomposed. The spinning temperature generally ranges from 300°C to 400°C, preferably, from 300°C to 380°C.

The diameter of the thus obtainable pitch fiber is set so as to meet the diameter and aspect ratio to be possessed by milled graphite fibers as a final product, taking into account the volume reduction during the carbonization and graphitization. The diameter generally ranges from 4 to 25 µm, preferably, from 5 to 15 µm.

The diameter of the pitch fiber is preferably set so that the ratio of the average size of boric compound particles to this diameter is not greater than 1/3, especially, not greater than 1/4.

When the above ratio exceeds 1/3, there is the danger that the size of boric compound particles dispersed in the molten pitch is so large that the fiber is likely to be cut during the spinning at part where the particles are contained to thereby disenable smooth spinning.

A graphite fiber having an internal texture structure suitable for the occlusion of lithium ions can be produced by carbonizing and graphitizing the pitch fiber obtained by the above spinning conducted so that the pitch molecules are oriented. For example, a graphite fiber having a pseudo-onion structure such that the graphite layers are oriented and laminated in parallel in a section made parallel to the fiber axis and substantially on circumferences in a section made perpendicularly to the fiber axis and such that the graphite layer laminate planes in the outer-core portion of the fiber are exposed at the surface of the fiber, can be obtained from the above pitch fiber.

The resultant pitch fiber is infusibilized to thereby obtain an infusibilized pitch fiber prior to the carbonization so that melt deformation or fusion bonding is avoided at the carbonization step.

Common methods having been employed in the production of carbon fiber and graphite fiber can be employed without any particular limitation in the above infusibilization. Examples of such common methods include the method in which the fiber is heated in an oxidative gas atmosphere of e.g. nitrogen dioxide or oxygen the method in which the fiber is treated in an oxidative aqueous solution of e.g. nitric acid or chromic acid and the method in which the fiber is subjected to polymerization treatment using light or gamma rays.

An easier method for infusibilizing the fiber is one in which the fiber is heated in the air. In this method, the average temperature elevation rate is generally at least 3°C/min, preferably, at least 5°C/min. The heating treatment is performed while raising the temperature up to about 350°C.

The solid material such as the above infusibilized pitch fiber is carbonized and pulverized in the production of the graphite material for negative electrode according to the present invention.

In this carbonization, boron atoms of the boric compound contained in the solid material would be diffused in the solid material in the course of temperature rise for carbonization to thereby realize a homogeneously distributed boron source.

This carbonization is generally conducted at 500°C to 1200°C in an inert atmosphere such as argon or nitrogen. When the carbonization temperature is below 500°C, the graphite material yield may be lowered in the graphitization step. On the other hand, when the carbonization temperature exceeds 1200°C, not only is the yield lowered at the pulverization of the carbon material but also the carbonization cost is increased.

An appropriate method of pulverizing the carbon material obtained by the carbonization is selected in conformity with, for example, the configuration of the carbon material and the properties to be exhibited by produced graphite material.

For example, the carbon material can be pulverized by the use of Henschel mixer, an attritor, a ball mill, a jet mill, a disk mill and other various devices.

In particular, when the carbon material is a carbon fiber, a device designed to rotate a rotor equipped with a blade at a high speed to thereby cut the carbon fiber in the direction perpendicular to the fiber axis is preferably employed for efficiently obtaining milled carbon fibers. Examples of such milling devices include a jet mill and a disk mill.

With the use of such a device, the fiber lengths (particle size) of milled carbon fibers can be controlled by regulating e.g. the rotating speed of the rotor, the angle of the blade or the size of porosity of a filter attached to the periphery of the rotor.

Milling of the carbon fiber can be conducted by means of the Henschel mixer, a ball mill or a grinding mill. However, these means are disadvantageous because a pressure applies to the fiber in the direction at right angles to the fiber to thereby increase the probability of longitudinal cracking along the fiber axis. Further, these means can hardly be stated as providing a suitable milling method because the milling takes a prolonged period of time.

The thus obtained particulate carbon material or milled carbon fibers are preferably regulated (classified) to a specified particle size according to necessity. In this particle size regulation, the average particle size and aspect ratio of the particulate carbon material or milled carbon fibers are preferably set so that the particulate graphite material or milled graphite fibers obtained as a final product have desirable values as described later, taking into account the volume reduction during the milling and graphitization.

The particulate carbon material and milled carbon fibers, for example, have an average particle size of 10 to 30 µm and an aspect ratio of 1 to 5.

The graphitization of the thus obtained carbon material is generally conducted at 2000°C or higher temperatures in a nonoxidative atmosphere, for example, an inert atmosphere such as nitrogen or argon.

In the graphite material for use in a negative electrode of a secondary battery, the quantity of lithium accepted, namely, the battery capacity has a substantially proportional relationship with the degree of graphitization. Therefore, it is required that the degree of graphitization be increased as much as possible, namely, the graphitization temperature be raised as much as possible. The inventor's investigations have demonstrated that, although the mechanism of action of the boric compound is not clear, the effect of advancing the graphitization, and the effect of increasing the charge and discharge capacities in case of being used in a negative electrode of a battery in the boron-added carbon material are exerted from a graphitization temperature close to the melting point of the boric compound (melting point of boron: 2080°C and melting point of boron carbide: 2450°C) or above.

In view of these, the graphitization is preferably conducted at a temperature of 2300°C or higher, still preferably, 2400°C to 3000°C.

In the above graphitization, the boron source is homogeneously dispersed in the carbon material and the graphitization of the carbon material is advanced from the inside of the carbon material, so that the amount of added boric compound can be reduced to the indispensable minimum to thereby effectively prevent the formation of boron nitride and boron carbide at the surface of the graphite material.

The apparatus for carrying out the above graphitization is not particularly limited, as long as these conditions are satisfied.

A resistance heating furnace using a graphite heater is not suitable for mass production of the graphite material because, when the graphitization is performed at temperature exceeding 2800°C, the graphite heater sublimes and a discharge breakage attributed to the heterogeneity of the resisting part of the heater occurs.

For example, Acheson type furnace (see, e.g., page 38 of "New Carbon Industry" published by Kindai Henshusha, Japan) is available as an apparatus which enables mass production of a graphite material with a high degree of graphitization and, hence, is often employed in the production of electrode material.

This graphitization furnace is an apparatus in which an object to be graphitized is set with its periphery covered with coke, to which a direct current is applied by means of electrodes disposed at two opposite ends thereof. The coke is a resistor and generates heat. Therefore, the heating element can be replaced and regulated upon every graphitization. The graphitization can be performed at about 3000°C in the Acheson type furnace without damaging any internal part thereof.

In this Acheson furnace the carbon material to be graphitized is placed in a graphite container and set in the furnace in order to keep the same separated from the coke.

In the Acheson furnace, generally, there is an air atmosphere inside the graphite container. The oxygen contained in the air of the graphite container reacts with carbon of the material to be graphitized in accordance with the rise of the temperature of the Acheson furnace and thus consumed. As a result, the carbon material held in the graphite container is graphitized in a nonoxidative gas composed mainly of remaining nitrogen.

Therefore, when the Acheson furnace is used in the conventional process in which the raw material composed of a mixture of the carbon material and the boric compound is graphitized, the boric compound inevitably reacts with nitrogen to thereby form boron nitride. Completely Converting the inside of the graphite container to an argon atmosphere is practically infeasible.

As apparent from the above, when the Acheson furnace is used, the presence of nitrogen gas cannot be avoided at the time of graphitization. Therefore, the process of the present invention in which the graphitization is carried out while avoiding the direct contact of the boron source with nitrogen is especially advantageous in producing the graphite material capable of enhancing the battery performance. More specifically, in the present invention, the boron source is homogeneously dispersed in the carbon material, so that the boron source and the atmosphere gas do not contact with each other in the graphitization step. As a result, even if the heating is performed in the presence of nitrogen gas, a trace amount of or no boron nitride is formed.

The graphite material for negative electrodes according to the present invention which is obtained by the above process and is in the form of, for example, particulate graphite material and milled graphite fibers is a solid solution of boron, in which carbon of the graphite crystal skeleton is replaced by boron. This graphite material is suitably employed in a negative electrode of a lithium-ion secondary battery, especially, a negative electrode of a nonaqueous lithium-ion secondary battery.

The graphite material for negative electrode according to the present invention generally contains boron in an amount of 0.1 to 2% by weight, preferably, 0.2 to 1% by weight. When the carbon material has been graphitized in the presence of the boric compound, only an elementary analysis is not satisfactory for finding whether or not carbon atoms of the graphite crystal skeleton are replaced by boron atoms. The reason is that similar results are obtained by a graphite material having boron carbide formed on the surface of graphite powder and a graphite material having boron trapped between graphite layers. These graphite materials rather suffer from minus effects from the viewpoint of lithium intercalation and electrical conductivity when being used for a negative electrode of a lithium-ion secondary battery.

Whether or not the boron contained in the graphite material is surely in the state of the solid solution, namely, whether or not carbon of the graphite crystal skeleton is replaced by boron can be found by measuring magnetic susceptibility. The magnetic susceptibility of graphite material can be measured in a magnetic field of 0.5 T at temperatures ranging from 50 to 310 K by the method reported by J. W. McClure (Carbon 20, 373 (1982)). Specifically, the absolute value of magnetic susceptibility is small when boron is in the state of the solid solution, so that it is preferred that the measuring be performed by the use of superconductive quantum interference device (SQUID) for improving the measuring accuracy.

The inventors reported before the results obtained by measuring the graphite material produced by mixing milled carbon fibers with boron carbide and graphitizing the mixture at 3000°C in an argon gas atmosphere, the measuring performed by the above method (Appl. Phys. Lett. 69 (3) 430).

As a result of the inventors' studies based on the above reported results, it has been found that the graphite material for use in a negative electrode of a lithium-ion secondary battery according to the present invention exhibits a magnetic susceptibility of at least -5 x 10⁻⁶ emu/g, preferably, at least -4.5 x 10⁻⁶ emu/g and that, in this respect, the graphite material of the present invention is markedly different from the graphite material in which boron is not in the state of the solid solution.

That is, the conventional graphite material in which boron is not in the state of the solid solution exhibits a negative value of -6 x 10⁻⁶ emu/g or below, of which absolute value is great. Further, the absolute value of magnetic susceptibility tends to increase in accordance with the lowering of the measuring temperature. This is understandable from the results reported by J. W. McClure.

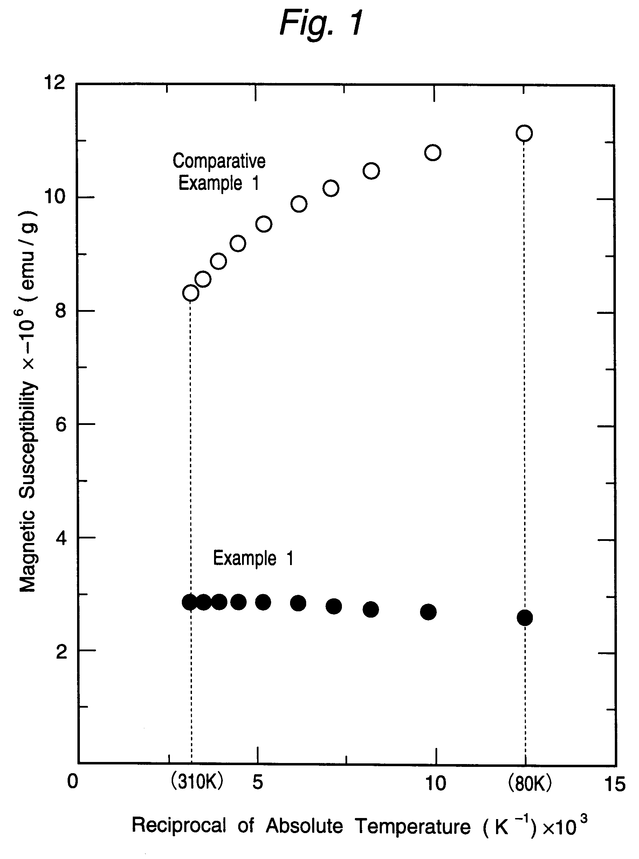

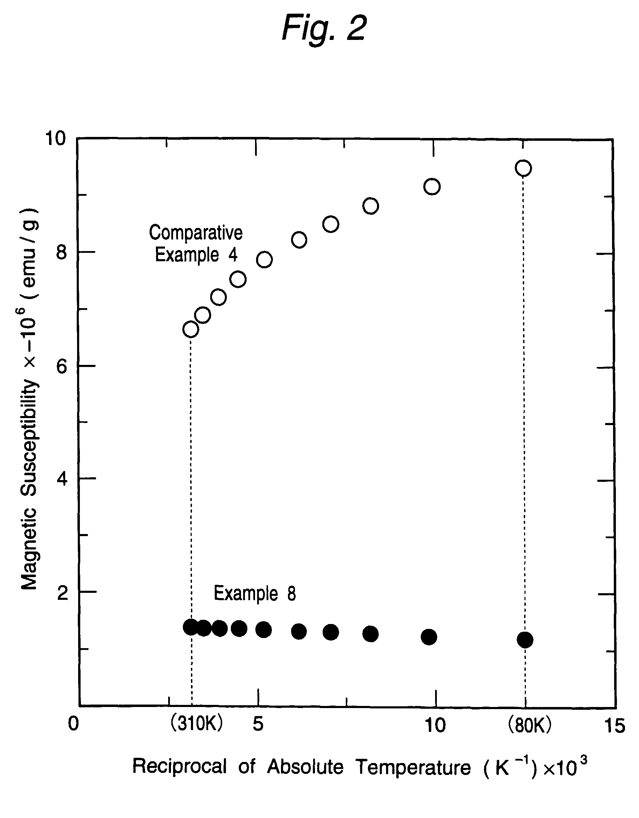

On the other hand, the graphite material having boron in the state of the solid solution therein according to the present invention exhibits a magnetic susceptibility whose absolute value is smaller than that of the conventional graphite material, which magnetic susceptibility has substantially no temperature dependence. The graphite material for negative electrode of the present invention which has the above magnetic susceptibility characteristics has a satisfactory amount of boron in the state of the solid solution and is highly graphitized. The above comparison of graphite material performance is strikingly manifest from Examples and Comparative Examples (See also Figs. 1 and 2).

The graphite material for negative electrodes according to the present invention preferably has a crystal structure, analyzed by X-ray diffractometry, exhibiting a spacing of graphite layers (d₀₀₂) of not greater than 0.338 nm, especially, not greater than 0.336 nm, a crystallite size along c-axis (Lc) of at least 35 nm, especially, at least 45 nm, a crystallite size along a-axis (La) of at least 50 nm, especially, at least 60 nm and a ratio of diffraction peak (101) to diffraction peak (100), designated as P₁₀₁/P₁₀₀, of at least 1.0.

The above crystal parameters function as an index of the degree of graphitization of each carbon material, and it is desired for the improvement of the battery performance that all the above parameters be satisfied.

The above X-ray diffractometry is a method in which a diffraction pattern of the carbon material such as the carbon fiber is obtained with the use of Cukα and a highly purified silicon as the X-ray source and reference material, respectively. The spacing of graphite layers (d₀₀₂) and size of crystallite along the c-axis (Lc₀₀₂) are respectively calculated from the peak position and half-value width of the 002 diffraction pattern, and the size of crystallite along the a-axis (La₁₁₀) is calculated from the peak position and half-value width of the 110 diffraction pattern, in accordance with the method of the Japan Society for Promotion of Scientific Research. The ratio of diffraction peak 101 to diffraction peak 100 is determined through a procedure comprising drawing a base line on the obtained diffraction pattern diagram, measuring the heights of diffraction peak 101 (2θ approximately equal to 44.5) and diffraction peak 100 (2θ approximately equal to 42.5) from the base line and calculating the quotient of the height of diffraction peak 101 divided by the height of diffraction peak 100.

It is preferred that the graphite material of the present invention has a surface boron nitride content of not greater than 10% by weight, especially, not greater than 5% by weight as measured by ESCA (electron spectroscopy for chemical analysis).

When the surface boron nitride content exceeds 10% by weight, the intercalation of lithium ions is inhibited and the conductivity is lowered, thereby inviting lowerings of the discharge capacity and the charge and discharge efficiency.

The graphite material of the present invention may have a particle size generally required for a graphite material for use in a negative electrode of a lithiumion secondary battery, which is generally up to 100 µm. The average particle size is in the range of 10 to 50 µm, preferably, 12 to 30 µm. This average particle size can be calculated from the particle size distribution determined by the laser diffractometry.

In the use of milled graphite fibers as the graphite material, it may occur when the average particle size is smaller than 10 µm that the amount of fine particles with active surface becomes so large that the decomposition of electrolyte becomes rapid in the secondary battery to thereby lower the initial charge and discharge efficiency and deteriorate the cycle performance.

On the other hand, the average particle size of the graphite material exceeding 50 µm is unfavorable because a thickness irregularity occurs at the time of sheeting and the amount of material having a particle size of 70 µm or greater, which becomes the cause of short circuit is increased. As a result, the packing density of the material in a battery cannot be increased (the battery capacity per volume is lowered).

When the graphite material of the present invention is in the form of milled graphite fibers, it is preferred that the aspect ratio (ratio of length to diameter of milled fibers) range from 1 to 30, especially, from 1 to 20.

When the aspect ratio exceeds 30, namely, when use is made of fibers of relatively large length, unfavorably, not only is the bulk density lowered to decrease the energy density per volume but also a short circuit is caused between the positive and negative electrodes. On the other hand, when the aspect ratio is less than 1, unfavorably, the proportion of fibers suffering from longitudinal cracking along the fiber axis is increased.

The above aspect ratio is an average of values determined by measuring 100 extracted samples of obtained milled graphite fibers.

A lithium-ion secondary battery, especially, a nonaqueous lithium-ion secondary battery which is excellent in battery performance, especially, charge and discharge characteristics such as initial charge and discharge efficiency and charge and discharge cycle performance can be produced by the use of the above graphite material of the present invention in a negative electrode thereof. The following reasons can additionally be mentioned.

First, edges of highly oriented graphite layers which are highly reactive with an electrolyte are exposed at the surface of particles obtained by pulverizing the common graphite material.

Consequently, a lithium-ion secondary battery using the above graphite particles in its negative electrode suffers from a decomposition of the electrolyte to thereby invite an extreme drop of the initial charge and discharge efficiency. Further, the subsequent charge and discharge cycle performance as well tends to extremely deteriorate because the negative electrode impedance is increased by a coating formed by the decomposition of the electrolyte.

By contrast, in the present invention, the boron atoms contained in the boric compound incorporated in the solid raw material would be diffused in the solid raw material by the rise of the temperature during the carbonization to act to disturb the orientation of pitch molecules being carbonized. Therefore, pulverization of the obtained carbon material followed by graphitization is not accompanied by the exposure of edges of highly oriented graphite layers which are highly reactive with the electrolyte at the surface of graphite particles. As a result, the graphite material of the present invention provides a negative electrode capable of forming a secondary battery which exhibits high initial efficiency and is excellent in cycle performance.

Further, the boron atoms homogeneously diffused during the carbonization act to homogeneously promote the graphitization of the carbon material from the internal part thereof to thereby attain a high degree of homogeneous graphitization. Therefore, the use of the obtained graphite material enables increasing the discharge capacity of lithium-ion secondary battery.

Still further, because of the partial replacement of carbon atoms of the graphite crystal skeleton by boron atoms, the use of the graphite material of the present invention in a negative electrode of a lithium-ion secondary battery shifts the charging voltage of the lithium-ion secondary battery by as much as about 30 to 50 mV toward a low voltage side to thereby facilitate the charging. This means that smooth charging proceeds even in a rapid charging state or an overvoltage state occurring during low-temperature charging, so that excellent rapid charging performance and low-temperature charging performance are imparted to the lithium-ion secondary battery.

A desirable negative electrode for use in a lithium-ion secondary battery can easily be fabricated by adding a binder such as polyethylene or polytetrafluoroethylene to the above graphite material of the present invention, forming the binder-loaded graphite material by means of rolls under pressure into a shape suitable for use in a negative electrode, e.g., a sheet or plate and conducting reduction treatment with the use of metallic lithium as the counter electrode.

The thus produced negative electrode has a large capacity per volume, so that it is suitable for miniaturization of a battery.

This negative electrode can be assembled together with common solid electrolyte or electrolytic solution and common positive electrode into a lithium-ion secondary battery.

Especially preferred electrolytic solution is an organic electrolytic solution (nonaqueous electrolytic solution) obtained by dissolving an electrolyte in an aprotic organic solvent having high dielectric constant. Examples of such organic solvents include propylene carbonate, ethylene carbonate, tetrahydrofuran, 2-methyltetrahydrofuran, dioxolane, 4-methyldioxolane, acetonitrile, dimethyl carbonate, methylethyl carbonate and diethyl carbonate. These solvents may be used either individually or in appropriate combination.

Examples of suitable electrolytes include lithium salts capable of forming stable anions, such as lithium perchlorate, lithium borofluoride, lithium hexachloroantimonate, lithium hexafluoroantimonate and lithium hexafluorophosphate. These electrolytes may be used either individually or in appropriate combination.

The positive electrode may be composed of, for example, any of metal oxides such as chromium oxide, titanium oxide, cobalt oxide and vanadium pentoxide, and lithium metal oxides such as lithium manganese oxide (LiMn₂O₄), lithium cobalt oxide (LiCoO₂) and lithium nickel oxide (LiNiO₂).

A separator may be interposed between the above positive and negative electrodes, which separator is comprised e.g. of a nonwoven or woven fabric of synthetic or glass fibers, a polyolefinic porous membrane or a nonwoven fabric of polytetrafluoroethylene.

A current collector can be used as in the conventional batteries. The current collector for the negative electrode may be a conductor electrochemically inert to the electrode and electrolytic solution, e.g., any of metals such as copper, nickel, titanium and stainless steel, formed into a plate, a foil or a rod.

The negative electrode obtained by the present invention can be assembled together with the above positive electrode, electrolytic solution, separator and current collector and further together with other battery constituting elements such as a gasket, a sealing plate and a casing into a cylindrical, rectangular or buttony lithium-ion secondary battery according to the customary procedure.

In place of the above assembly into a battery configuration, a triode cell can be constructed of the negative electrode obtained by the present invention together with a reference electrode and a positive electrode of metallic lithium in order to easily evaluate battery properties.

The graphite material for use in a negative electrode of a lithium-ion secondary battery according to the present invention comprises a graphite material obtained by solidifying a homogeneous molten mixture composed of a molten pitch and a boric compound to thereby obtain a solid material, carbonizing the solid material, pulverizing the carbonized material and graphitizing the pulverized material, this graphite material having a specified magnetic susceptibility. This graphite material can be produced at lowered cost and can provide a negative electrode which enables producing a lithium-ion secondary battery being excellent in charge and discharge characteristics such as discharge capacity, initial charge and discharge efficiency and repeated charge and discharge performance.

Moreover, when the above graphite material of the present invention is milled graphite fibers produced from a fibrous material (pitch fiber) obtained by spinning the above homogeneous molten mixture, a negative electrode material having an internal texture especially suitable for occlusion of lithium ions can be provided.

The process for producing a graphite material for use in a negative electrode of a lithium-ion secondary battery according to the present invention comprises solidifying a homogeneous molten mixture of a molten pitch and a boric compound to thereby obtain a solid material of desired configuration, especially, a fibrous material (pitch fiber), carbonizing the solid material, pulverizing the carbon material and graphitizing the particulate carbon material. Thus, in this graphitization, the boron source homogeneously dispersed in the carbon material promotes the graphitization of the carbon material from the inside of the carbon material, so that the amount of added boric compound can be reduced to the indispensable minimum with the result that not only is the formation of boron carbide effectively prevented but also, even in a nitrogen gas containing atmosphere, a trace amount of or no boron nitride is formed.

### EXAMPLES

The present invention will further be illustrated with reference to the following Examples, which in no way limit the scope of the invention.

### Example 1

3 g of boron carbide (B₄C) having an average particle size of 32 µm was added to 97 g of optically isotropic easily graphitizable pitch derived from petroleum, having a softening point of 180°C (proportion of added boron atoms: 2.36% by weight). The mixture was agitated at 250°C in a nitrogen atmosphere for 1 hr so as to attain a homogeneous mixing. The thus obtained homogeneous molten mixture was placed in a graphite crucible and allowed to stand still, thereby obtaining a foamed solid material.

The obtained solid material was heated at 650°C in a nitrogen atmosphere for 1 hr to thereby attain a carbonization and cooled to ordinary temperature.

The carbonization yield was 71.5% by weight based on the pitch.

The resultant carbon material was pulverized by means of a vibrating disk mill, and the average particle size was adjusted to 20 µm.

The thus obtained particulate carbon material was charged into a resistance heating furnace and heated at 2800°C in a nitrogen gas atmosphere to thereby attain a graphitization. Thus, there was obtained a particulate graphite material. The graphitization yield was 92% by weight based on the carbon material.

The average particle size of the particulate graphite material was 18 µm, which was slightly smaller than that of the particulate carbon material. The magnetic susceptibility of the graphite material was measured at 50 to 310 K in a magnetic field of 0.5 T, which exhibited a substantially constant value of -2.8 x 10⁻⁶ emu/g. The magnetic susceptibility measuring results at 80 to 310 K are shown in Fig. 1.

As apparent from Fig. 1, the graphite material of this Example had a magnetic susceptibility whose absolute value was as small as 2.8 x 10⁻⁶. Further, this magnetic susceptibility exhibited substantially no temperature dependence.

The degree of graphitization of this graphite material was measured by X-ray diffractometry, and it was found that the spacing of graphite layers (d₀₀₂) was 0.3347 nm, the crystallite size along c-axis (Lc) was at least 100 nm, the crystallite size along a-axis (La) was at least 100 nm and the ratio of diffraction peak (101) to diffraction peak (100), designated as P₁₀₁/P₁₀₀, was 2.65.

The surface of this graphite material was analyzed by ESCA. Neither boron nitride nor boron carbide was detected on the surface of the graphite material, irrespective of the heating treatment in nitrogen.

5 g of this particulate graphite material was kneaded together with 0.35 g of a binder composed of PVDF and N-methyl-2-pyrrolidone as a solvent added thereto, thereby obtaining a slurry. This slurry was applied to a copper foil, dried to thereby remove the solvent and pressed into a 80 µm thickness. Thus, a negative electrode was obtained.

Using this negative electrode coupled with a positive electrode of metallic lithium, charge and discharge capacity characteristics were measured in an electrolytic solution obtained by dissolving lithium perchlorate (LiClO₄) as an electrolyte in a 1:1 mixed carbonic ester solvent of ethylene carbonate (EC) and dimethyl carbonate (DMC) in a concentration of 1 M. The charge and discharge capacity characteristics were measured under charge and discharge made at a constant current of 200 mA/g. The discharge capacity was the capacity exhibited at a cell voltage drop to 2 V.

The measurement was repeated 20 times. The initial discharge capacity was 348 mAh/g and the initial charge and discharge efficiency was 92.3%. The second and ensuing discharge capacities were 350 mAh/g and the second and ensuing charge and discharge efficiencies exhibited excellent values of 100%.

### Example 2

A particulate carbon material was prepared in the same manner as in Example 1, except that a molten mixture (proportion of added boron atoms: 2.36% by weight) was prepared from 100 g of optically isotropic easily graphitizable pitch derived from coal, having a softening point of 70°C, and 7.5 g of boron oxide (B₂O₃) having an average particle size of 28 µm and that the carbonization temperature was changed to 1100°C.

The thus obtained particulate carbon material was charged into an Acheson type furnace in air and graphitized at 2900°C to thereby obtain a particulate graphite material having an average particle size of 20 µm. The carbonization yield was 62.0% by weight based on the pitch, and the graphitization yield was 94% by weight based on the carbon material.

The magnetic susceptibility of the obtained particulate graphite material was a substantially constant value of -1.5 x 10⁻⁶ emu/g, d₀₀₂ was 0.3351 nm, Lc was at least 100 nm, La was at least 100 nm and P₁₀₁/P₁₀₀ was 2.75.

Neither boron nitride nor boron carbide was detected by ESCA on the surface of the graphite material.

A negative electrode was prepared using this particulate graphite material in the same manner as in Example 1 and the charge and discharge capacities were measured in the same manner as in Example 1.

As a result of the measurement, it was found that the initial discharge capacity was 354 mAh/g and the initial charge and discharge efficiency was 92.6%. The second and ensuing discharge capacities were 355 mAh/g and the second and ensuing charge and discharge efficiencies exhibited excellent values of 100%.

### Example 3

A particulate graphite material having an average particle size of 23 µm was prepared in the same manner as in Example 1, except that a molten mixture (proportion of added boron atoms: 2.36% by weight) was prepared from 97 g of optically anisotropic coal mesophase pitch (mesophase 100%) having a softening point of 280°C and 3 g of boron carbide (B₄C) having an average particle size of 32 µm. The carbonization yield was 81.5% by weight based on the pitch, and the graphitization yield was 92% by weight based on the carbon material.

The magnetic susceptibility of the obtained particulate graphite material was substantially constant value of -2.4 x 10⁻⁶ emu/g, d₀₀₂ was 0.3349 nm, Lc was at least 100 nm, La was at least 100 nm and P₁₀₁/P₁₀₀ was 2.71.

Neither boron nitride nor boron carbide was detected by ESCA on the surface of the graphite material.

A negative electrode was prepared using this particulate graphite material in the same manner as in Example 1 and the charge and discharge capacities were measured in the same manner as in Example 1.

As a result of the measurement, it was found that the initial discharge capacity was 348 mAh/g and the initial charge and discharge efficiency was 92.3%. The second and ensuing discharge capacities were 350 mAh/g and the second and ensuing charge and discharge efficiencies exhibited excellent values of 100%.

### Example 4

A particulate graphite material having an average particle size of 23 µm was prepared in the same manner as in Example 3, except that the proportion of added boron atoms in the molten mixture was changed to 4.71% by weight.

The magnetic susceptibility of the obtained particulate graphite material was substantially constant value of -3.1 x 10⁻⁶ emu/g, d₀₀₂ was 0.3347 nm, Lc was at least 100 nm, La was at least 100 nm and P₁₀₁/P₁₀₀ was 3.1.

The surface boron nitride content detected by ESCA was 7 %.

A negative electrode was prepared using this particulate graphite material in the same manner as in Example 1 and the charge and discharge capacities were measured in the same manner as in Example 1.

As a result of the measurement, it was found that the initial discharge capacity was 352 mAh/g and the initial charge and discharge efficiency was 92.3%. The second and ensuing discharge capacities were 352 mAh/g and the second and ensuing charge and discharge efficiencies exhibited excellent values of 100%.

### Example 5

3 g of boron carbide having an average particle size of 1.7 µm was added to 97 g of 100% optically anisotropic coal mesophase pitch having a softening point of 280°C (proportion of added boron atoms: 2.36% by weight). The mixture was agitated at 350°C in a nitrogen atmosphere for 1 hr so as to attain a homogeneous molten mixture.

This molten mixture was drawn through a nozzle comprising a 3 mm wide slit and, arranged therein, a row of 1500 spinning orifices each having a diameter of 0.2 mm while injecting hot air through the slit, thereby obtaining a pitch fiber (fibrous solid material). The pitch delivery rate, pitch temperature, hot air temperature and hot air pressure were 1000 g/min, 340°C, 350°C and 0.2 kg/cm²G, respectively.

The spun pitch fiber was collected on a belt having a collection zone of 20-mesh stainless steel net while sucking from the back of the belt. The resultant mat of collected pitch fiber was heated in the air at temperatures which were elevated from room temperature to 300°C at an average elevation rate of 6°C/min to thereby infusibilize the fiber mat.

The thus infusibilized fiber mat was heated at 650°C in a nitrogen atmosphere for 1 hr and cooled to ordinary temperature. Thus, there was obtained a carbon fiber mat in which boron was homogeneously contained.

The carbon fiber mat was milled with the use of a cross flow mill to thereby obtain milled carbon fibers having an average particle size of 25 µm.

The obtained milled carbon fibers were charged into a resistance heating furnace and graphitized at 2950°C in an argon containing 10% by volume of nitrogen, thereby obtaining milled graphite fibers.

The magnetic susceptibility of the milled graphite fibers was a substantially constant value of -2.2 x 10⁻⁶ emu/g, d₀₀₂ was 0.3354 nm, Lc was at least 100 nm, La was at least 100 nm and P₁₀₁/P₁₀₀ was 2.23.

5 g of the milled graphite fibers were kneaded together with 0.35 g of a binder composed of PVDF and N-methyl-2-pyrrolidone as a solvent added thereto, thereby obtaining a slurry. This slurry was applied to a copper foil, dried to thereby remove the solvent and pressed into a 80 µm thickness. Thus, a negative electrode was obtained.

Using this negative electrode, charge and discharge capacity characteristics were measured in the same manner as in Example 1.

The discharge capacity was the capacity exhibited at a cell voltage drop to 1.5 V. The measurement was repeated 20 times. The initial discharge capacity was 354 mAh/g and the initial charge and discharge efficiency was 94.3%. The second and ensuing discharge capacities were 355 mAh/g and the second and ensuing charge and discharge efficiencies were 100%.

### Example 6

Milled graphite fibers having an average particle size of 20 µm were produced in the same manner as in Example 5, except that a molten mixture was prepared from 100 parts by weight of 100% optically anisotropic petroleum mesophase pitch having a softening point of 273°C and 7.5 parts by weight of boron oxide having an average particle size of 3 µm (proportion of added boron atoms: 2.36% by weight).

The magnetic susceptibility of the milled graphite fibers was a substantially constant value of -1.8 x 10⁻⁶ emu/g, d₀₀₂ was 0.3352 nm, Lc was at least 100 nm, La was at least 100 nm and P₁₀₁/P₁₀₀ was 2.21.

A negative electrode was prepared using the obtained milled graphite fibers in the same manner as in Example 4 and the charge and discharge characteristics were measured in the same manner as in Example 4. The initial discharge capacity was 353 mAh/g and the initial charge and discharge efficiency was 94.6%. The second and ensuing discharge capacities were 353 mAh/g and the second and ensuing charge and discharge efficiencies were 100%.

### Example 7

Milled graphite fibers having an average particle size of 20 µm were produced in the same manner as in Example 6, except that the proportion of added boron atoms in the molten mixture was changed to 3.4% by weight and the milled carbon fibers were graphitized in an nitrogen gas.

The magnetic susceptibility of the milled graphite fibers was a substantially constant value of -2.1 x 10⁻⁶ emu/g, d₀₀₂ was 0.3351 nm, Lc was at least 100 nm, La was at least 100 nm and P₁₀₁/P₁₀₀, was 2.32.

The surface boron nitride content detected by ESCA was 1 %.

A negative electrode was prepared using the obtained milled graphite fibers in the same manner as in Example 4 and the charge and discharge characteristics were measured in the same manner as in Example 4. The initial discharge capacity was 355 mAh/g and the initial charge and discharge efficiency was 94.6%. The second and ensuing discharge capacities were 355 mAh/g and the second and ensuing charge and discharge efficiencies were 100%.

### Example 8

The same petroleum pitch as used in Example 6 was charged through a hopper into an extruder at a fixed rate. Simultaneously, boron carbide having an average particle size of 1.7 µm was charged through another hopper into the extruder in an accurate amount of 3.1 parts by weight per 100 parts by weight of the pitch (proportion of added boron atoms: 2.36% by weight). In the extruder, the pitch was heated so as to melt and homogeneously mixed with the boron carbide while conducting a deaeration. Thus, a molten mixture was obtained.

The molten mixture discharged from the extruder was fed at a fixed rate under pressure to the same spinning machine as in Example 5, and spinning was conducted in the same manner as in Example 5.

Milled carbon fibers having an average particle size of 22 µm were obtained from the spun pitch fiber in the same manner as in Example 1, except that the carbonization temperature was 1050°C.

A graphite box was packed in air with the obtained milled carbon fibers, and coke was placed around the graphite box. Electricity was passed through the coke as a resistor by applying voltage to electrode plates arranged at two opposite ends to thereby effect a heat evolution. Thus, graphitization was carried out at 2850°C for 10 hr, followed by natural cooling, with the result that milled graphite fibers were obtained.

The magnetic susceptibility of the obtained milled graphite fibers was a constant value of -1.5 x 10⁻⁶ emu/g. The magnetic susceptibility measuring results at 80 to 310 K are shown in Fig. 2.

As apparent from Fig. 2, the milled graphite fibers of this Example had a magnetic susceptibility whose absolute value was as small as 1.5 x 10⁻⁶. Further, this magnetic susceptibility exhibited substantially no temperature dependence.

The degree of graphitization of the milled graphite fibers was measured by X-ray diffractmetory, and it was found that d₀₀₂ was 0.3356 nm, Lc was at least 100 nm, La was at least 100 nm and P₁₀₁/P₁₀₂ was 2.1.

Neither boron nitride nor boron carbide was detected by ESCA on the surface of the graphite milled fibers, irrespective of the graphitization in nitrogen.

A negative electrode was prepared using the milled graphite fibers in the same manner as in Example 4 and the charge and discharge characteristics were measured in the same manner as in Example 4. As a result of the measurement, it was found that the initial discharge capacity was 359 mAh/g and the initial charge and discharge efficiency was 93.8%. The second and ensuing discharge capacities were 357 mAh/g and the second and ensuing charge and discharge efficiencies exhibited excellent values of 100%.

### Comparative Example 1

A graphite material having an average particle size of 20 µm was prepared in the same manner as in Example 1, except that boron carbide was not used. The carbonization yield was 67.5% by weight based on the pitch, and the graphitization yield was 92% by weight based on the carbon material.

The magnetic susceptibility of the obtained graphite material was measured in the same manner as in Example 1. It was -8.2 x 10⁻⁶ emu/g at 310 K, and its absolute value exhibited a tendency to increase in accordance with the lowering of the temperature. The magnetic susceptibility measuring results at 80 to 310 K are shown in Fig. 1.

As apparent from Fig. 1, the graphite material of this Comparative Example in which boron is not in the state of the solid solution has a magnetic susceptibility whose absolute value is as large as 8.2 x 10⁻⁶. Further, this magnetic susceptibility changed depending on the measuring temperature. Specifically, the absolute value tended to increase in accordance with the lowering of the temperature.

After the graphitization, the degree of graphitization was measured by X-ray diffractometry, and it was found that d₀₀₂ was 0.3355 nm, Lc was at least 100 nm, La was at least 100 nm and P₁₀₁/P₁₀₀ was 2.15.

A negative electrode was prepared using this graphite material in the same manner as in Example 1 and the charge and discharge capacities were measured in the same manner as in Example 1.

As a result of the measurement, it was found that the initial discharge capacity was 265 mAh/g and the initial charge and discharge efficiency was 67.5%. The second and ensuing charge and discharge efficiencies were about 95%, and the discharge capacity gradually decreased in accordance with the advance of charge and discharge cycles. Both the capacity and the efficiency were lower than those of the Examples.

### Comparative Example 2

A fibrous material (pitch fiber) was obtained by spinning the same pitch as employed in Example 3 according to the customary technique.

The obtained pitch fiber was infusibilized and carbonized at 650°C in a nitrogen atmosphere.

The resultant carbon fiber was milled by means of a cross flow mill. The thus obtained milled carbon fibers were graphitized at 3100°C in an argon atmosphere.

The obtained milled graphite fibers had an average particle size of 18 µm and a magnetic susceptibility was -6.5 x 10⁻⁶ emu/g at 310 K, d₀₀₂ was 0.3364 nm, Lc was 44 nm, La was 72 nm and P₁₀₁/P₁₀₀ was 1.19.

A negative electrode was prepared using the obtained milled graphite fibers in the same manner as in Example 1 and the charge and discharge capacities were measured in the same manner as in Example 1.

As a result of the measurement, it was found that the initial discharge capacity was 305 mAh/g and the initial charge and discharge efficiency was 91.4%. The second and ensuing discharge capacities were 302 mAh/g and the second and ensuing charge and discharge efficiencies were 100%. Thus, the discharge capacity was smaller than those of the Examples.

### Comparative Example 3

7 parts by weight of boron carbide was added to 100 parts by weight of milled carbon fibers obtained in the same manner as in Comparative Example 2 and mixed. The thus obtained mixture was graphitized in the same manner as in Example 2.

The magnetic susceptibility of the obtained milled graphite fibers was -3.0 x 10⁻⁶ emu/g at 50 to 310 K, d₀₀₂ was 0.3358 nm, Lc was 93 nm, La was at least 100 nm and P₁₀₁/P₁₀₀ was 1.68.

Both boron nitride and boron carbide were detected by ESCA on the surface of the graphite fibers. The surface boron nitride content was 12%.

A negative electrode was prepared using the obtained milled graphite fibers in the same manner as in Example 1 and the charge and discharge capacities were measured in the same manner as in Example 1.

As a result of the measurement, it was found that the initial discharge capacity was 320 mAh/g and the initial charge and discharge efficiency was 92.0%. The second and ensuing discharge capacities were 315 mAh/g and the second and ensuing charge and discharge efficiencies were 100%. Thus, the discharge capacity was smaller than those of the Examples.

### Comparative Example 4

Infusibilized pitch fiber mat was prepared in the same manner as in Example 6, except that boron carbide was not used. The infusibilized pitch fiber mat was carbonized at 750°C in a nitrogen atmosphere, thereby obtaining a carbon fiber.

The obtained carbon fiber was milled according to the customary technique and graphitized at 3100°C in an argon atmosphere. Thus, milled graphite fibers were obtained.

The degree of graphitization of the obtained milled graphite fibers was measured by X-ray diffractometry, and it was found that d₀₀₂ was 0.3364 nm, Lc was 40 nm, La was 60 nm and P₁₀₁/P₁₀₀ was 1.19.

The magnetic susceptibility of the obtained milled graphite fibers was -6.5 x 10⁻⁶ emu/g at 310 K, and its absolute value exhibited a tendency to increase in accordance with the lowering of the temperature. The magnetic susceptibility measuring results at 80 to 310 K are shown in Fig. 2.

As apparent from Fig. 2, the milled graphite fibers of this Comparative Example in which boron is not in the state of the solid solution has a magnetic susceptibility whose absolute value is as large as 6.5 x 10⁻⁶. Further, this magnetic susceptibility changed depending on the measuring temperature. Specifically, the absolute value tended to increase in accordance with the lowering of the temperature.

A negative electrode was prepared using the milled graphite fibers in the same manner as in Example 4 and the charge and discharge characteristics were measured in the same manner as in Example 4. As a result of the measurement, it was found that the initial discharge capacity was 305 mAh/g and the initial charge and discharge efficiency was 91.4%. The second and ensuing discharge capacities were 302 mAh/g and the second and ensuing charge and discharge efficiencies were 100%. Thus, the discharge capacity was smaller than those of the Examples.

### Comparative Example 5

7 parts by weight of boron carbide was added to 100 parts by weight of the milled carbon fibers prepared in the same manner as in Comparative Example 4 and the resultant mixture was graphitized at 2850°C for 10 hr in the same manner as in Example 8.

The degree of graphitization of the obtained milled graphite fibers was measured by X-ray diffractometry, and it was found that d₀₀₂ was 0.3354 nm, Lc was at least 100 nm, La was at least 100 nm and P₁₀₁/P₁₀₀ was 2.21.

Both boron nitride and boron carbide were detected by ESCA on the surface of the graphite fibers. The surface boron nitride content was 20%.

The magnetic susceptibility of the obtained milled graphite fibers was -3.0 x 10⁻⁶ emu/g at 310 K.

A negative electrode was prepared using the milled graphite fibers in the same manner as in Example 4 and the charge and discharge characteristics were measured in the same manner as in Example 4. As a result of the measurement, it was found that the initial discharge capacity was 320 mAh/g and the initial charge and discharge efficiency was 92.0%. The second and ensuing discharge capacities were 315 mAh/g and the second and ensuing charge and discharge efficiencies were 100%. Thus, the discharge capacity was smaller than those of the Examples.

## Claims

1. A graphite material for use in a negative electrode of a lithium-ion secondary battery, comprising a graphite material obtainable by solidifying a homogeneous molten mixture composed of a molten pitch and a boric compound to thereby obtain a solid material, carbonizing the solid material, pulverizing the carbonized material and graphitizing the pulverized material, said graphite material having a magnetic susceptibility of at least -5 x 10⁻⁶ emu/g.

2. The graphite material as claimed in claim 1, wherein the molten pitch is selected from easily graphitizable petroleum and coal pitches having softening points ranging from 70°C to 230°C.

3. A graphite material for use in a negative electrode of a lithium-ion secondary battery, comprising milled graphite fibers obtainable by spinning a homogeneous molten mixture composed of a molten pitch and a boric compound to thereby obtain a fibrous material, infusibilizing the fibrous material, carbonizing the infusibilized material, milling the carbonized material and graphitizing the milled material, said milled graphite fibers having a magnetic susceptibility of at least -5 x 10⁻⁶ emu/g.

4. The graphite material as claimed in claim 3, wherein the pitch is an easily graphitizable pitch whose mesophase content is substantially 100%.

5. A process for producing a graphite material for use in a negative electrode of a lithium-ion secondary battery, which comprises the steps of:
solidifying a molten mixture obtained by homogeneously mixing a molten pitch and a boric compound to thereby obtain a solid material,
carbonizing the solid material at 500°C to 1200°C in an inert gas to thereby obtain a carbon material,
pulverizing the carbon material into a particulate carbon material having an average particle size of 10 to 50 µm, and
graphitizing the particulate carbon material at 2300°C or higher in an inert gas.

6. The process as claimed in claim 5, wherein, in the graphitization step, the inert gas contains nitrogen gas and wherein the graphite material obtained by the graphitization has a surface boron nitride content of 0 to 10% by weight as measured by ESCA.

7. A process for producing a graphite material for use in a negative electrode of a lithium-ion secondary battery, which comprises the steps of:
spinning a homogeneous molten mixture composed of a molten pitch and a boric compound to thereby obtain a fibrous material,
infusibilizing the fibrous material in an oxidative gas to thereby obtain an infusibilized fiber, carbonizing the infusibilized fiber at 500° to 1200°C in an inert gas to thereby obtain a carbonized fiber,
milling the carbonized fiber into milled carbon fibers having an average particle size of 10 to 50 µm, and
graphitizing the milled carbon fibers at 2300°C or higher in an inert gas.

8. The process as claimed in claim 7, wherein, in the graphitization step, the inert gas contains nitrogen gas and wherein the graphite material obtained by the graphitization has a surface boron nitride content of 0 to 10% by weight as measured by ESCA.
